# FASCICULE DE BREVET EUROPEEN

(11) **EP 1 213 814 B1**
(45) Date de publication et mention de la délivrance du brevet: **13.07.2016**
(21) Numéro de dépôt: 01128895.8
(22) Date de dépôt: 05.12.2001
(51) Int. Cl.: H02J 1/00

(54) **Distribution d'énergie à des éléments d' un véhicule automobile notamment à un dispositif de climatisation**
Energieverteilung an Fahrzeugselementen insbesondere an Klimaanlage
Electric power distribution to vehicle elements particularly to an air conditioning system

(30) Priorité: 11.12.2000 FR 0016057
(43) Date de publication de la demande: 12.06.2002
(73) Titulaire: VALEO SYSTEMES THERMIQUES, 78321 Le Mesnil St Denis Cedex (FR)
(72) Inventeur: Aubry, Vincent, 91400 Orsay (FR)

(56) Documents cités:
- EP-A- 0 805 540
- DE-C- 19 621 555
- US-A- 5 079 437

## Description

### Arrière-plan de l'invention

L'invention se rapporte à l'alimentation en énergie d'éléments alimentés en tension dans des véhicules automobiles, et, plus particulièrement, mais non exclusivement, à l'alimentation en énergie d'éléments de dispositifs de climatisation.

Outre un groupe motoventilateur produisant le flux d'air pulsé, les dispositifs de climatisation de véhicules automobiles comprennent une pluralité d'éléments fonctionnant sous alimentation en énergie, tels les actionneurs de volets de répartition et de mixage d'air, des éléments de tableau de commande de la climatisation, et des capteurs, notamment des sondes de température.

De façon habituelle, tant le motoventilateur que les autres éléments du dispositif de climatisation sont alimentés à partir d'un bus d'énergie principal du véhicule transmettant la tension de la batterie.

A chaque élément doit être associé un circuit ayant pour objets :
- de réaliser un filtrage et une protection vis-à-vis de la "pollution" électrique présente sur le bus d'énergie principal, et
- de délivrer une ou plusieurs tensions régulées pour des circuits logiques de commande ou des interfaces analogiques telles que, par exemple, des interfaces d'alimentation d'enroulements de moteurs pas à pas constituant des actionneurs de volets.

La "pollution" électrique est généralement importante dans un véhicule : impulsions, ondes transitoires, surtensions, coupures, interférences électromagnétiques, inversions accidentelles de polarité, ondulations...

Un agencement antiparasite pour le réseau d'alimentation permettant de remédier aux "pollutions" électriques est décrit dans la Brevet Allemand DE 196 21 555 C1 qui montre une unité de distribution d'énergie pour une pluralité d'élements alimentés en tension dans un véhicule automobile comportant, un ensemble de filtrage et protection connecté entre une entrée et une sortié d'énergie pour délivrer une même tension de fonctionnement sécurisée auxdits éléments.

Par ailleurs, la fourniture de tension régulée pour circuits logiques requiert le passage d'une tension de batterie de 12 V ou 24 V, voire 42 V dans le futur, à une tension de 5 V, voire moins avec des nouvelles générations de composants.

Même si des circuits de filtrage, protection et régulation fonctionnant de façon satisfaisante dans de telles conditions peuvent être produits à bas coûts, ils engendrent une dissipation calorifique significative. La sophistication des dispositifs de climatisation requiert un nombre toujours croissant d'éléments alimentés en tension. Le coût global des circuits de filtrage, protection et régulation devient non négligeable, et leur dissipation calorifique totale devient très importante ce qui, lorsque le dispositif de climatisation fonctionne en réfrigération, affecte la capacité de refroidissement utile.

### Objets et résumé de l'invention

L'invention se rapporte à une unité de distribution d'énergie selon la revendication 1. L'invention a pour but de remédier à ces inconvénients et propose à cet effet une unité de distribution d'énergie pour des éléments d'un dispositif de climatisation ou, plus généralement, pour une pluralité d'éléments alimentés en énergie électrique dans un véhicule automobile,

Cette unité comporte une entrée d'alimentation en énergie pour recevoir une tension d'entrée, une sortie d'énergie, et un ensemble de filtrage, protection et régulation de tension connecté entre l'entrée d'alimentation et la sortie d'énergie pour délivrer une même tension de fonctionnement sécurisée auxdits éléments via un bus d'énergie relié à la sortie d'énergie.

Ainsi, les différents éléments étant connectés sur un bus d'énergie sécurisé, les circuits électroniques de traitement de l'énergie reçue associés à ces éléments peuvent être limités à des circuits éventuels d'abaissement et régulation de tensions pour l'alimentation de circuits logiques ou d'interfaces analogiques particulières.

L'unité de distribution d'énergie peut comporter en outre une entrée d'informations pour connexion à un premier bus d'informations, une sortie d'informations pour connexion à un bus d'informations particulier auxdits éléments, et un circuit de contrôle pour transférer sur le bus d'informations particulier les informations relatives auxdits éléments circulant sur le premier bus d'informations, et inversement.

Grâce à cette disposition, l'unité de distribution d'énergie constitue à la fois une passerelle d'énergie et une passerelle d'informations entre, d'une part, un bus d'énergie et un bus d'informations du véhicule et, d'autre part, un bus d'énergie et un bus d'informations particulier.

Avantageusement alors, le circuit de contrôle comprend des moyens pour répartir dans le temps l'énergie distribuée aux différents éléments, par décalage temporel éventuel des commandes adressées à ces éléments via le bus d'informations particulier.

On dispose ainsi d'un système de répartition et gestion d'énergie qui permet de limiter la puissance à délivrer à tout instant, donc le dimensionnement de l'ensemble de filtrage, protection et régulation de tension, et du bus d'énergie sécurisée.

L'invention a aussi pour objet un dispositif de climatisation de véhicule automobile comprenant un groupe motoventilateur et une pluralité d'éléments alimentés en tension, dispositif comprenant une unité de distribution d'énergie telle que définie ci-dessus et un bus d'énergie sécurisée relié à la sortie d'énergie de l'unité de distribution d'énergie et alimentant lesdits éléments.

L'unité de distribution d'énergie peut être implantée dans le groupe motoventilateur et plus particulièrement dans un module de commande de moteur. Il est alors possible de disposer en entrée d'alimentation en énergie de la tension préfiltrée fournie au motoventilateur. Plus particulièrement, l'unité de distribution reçoit une tension filtrée d'un circuit de filtrage du module de commande moteur du groupe motoventilateur, tout en profitant du flux d'air produit par ce dernier pour évacuer les calories dissipées.

Il est toutefois possible d'implanter l'unité de distribution d'énergie dans le tableau de commande de la climatisation, ou sous forme d'un module indépendant.

### Brève description des dessins

L'invention sera mieux comprise à la lecture de la description faite ci-après, à titre indicatif mais non limitatif, en référence aux dessins annexés, sur lesquels :
- la figure 1 est un schéma très général d'un dispositif de climatisation de véhicule automobile selon un mode de mise en oeuvre de l'invention ;
- la figure 2 est un schéma d'un mode de réalisation de l'unité de distribution d'énergie incluse dans le dispositif de la figure 1 ;
- la figure 3 est un schéma de l'ensemble de filtrage, protection et régulation de tension de l'unité de distribution d'énergie de la figure 2 ;
- les figures 4A, 4B illustrent un exemple de réalisation de gestion d'énergie au moyen de l'unité de distribution d'énergie de la figure 2;
- la figure 5 est un schéma d'une variante d'implantation de l'unité de distribution d'énergie de la figure 2 ; et
- les figures 6 et 7 sont des schémas très généraux de dispositifs de climatisation de véhicule automobile selon d'autres modes de mise en oeuvre de l'invention.

### Description détaillée de modes de réalisation

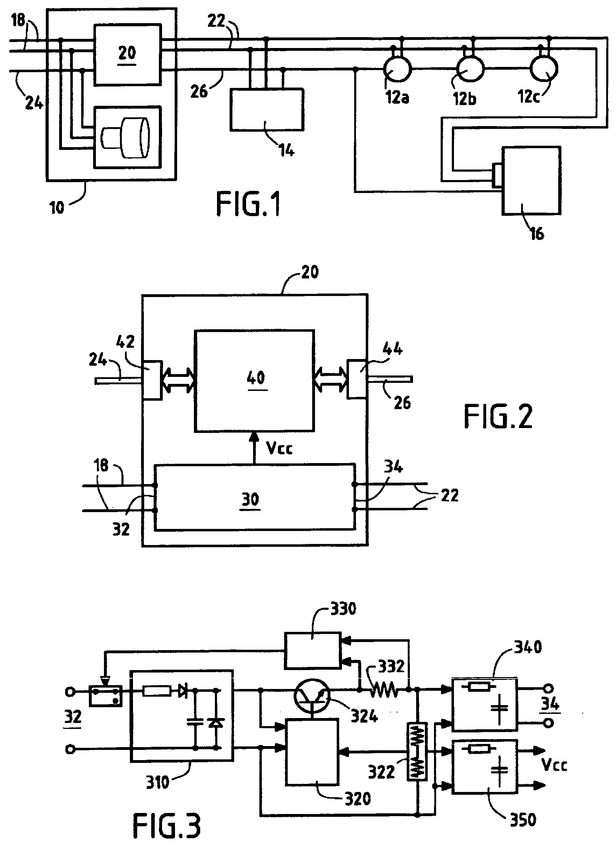

La figure 1 montre très schématiquement différents composants d'un dispositif de climatisation de véhicule automobile, à savoir un groupe motoventilateur 100 destiné à produire un flux d'air pulsé et une pluralité d'autres éléments comprenant un ensemble d'activateurs 12a, 12b, 12c pour la commande de volets de répartition du flux d'air, un tableau 14 de commande de la climatisation et un ou plusieurs capteurs 16 tels capteurs de température, capteurs d'ensoleillement,...

Le groupe motoventilateur 100 comprend un moteur 10 d'entraînement d'une turbine et un module 60 de commande de moteur qui permet d'entraîner le moteur à une vitesse de rotation variable en fonction du débit d'air désiré dans le groupe motoventilateur 100.

Le module 60 comporte une carte de circuit imprimé sur laquelle est disposé un ensemble 50 de circuits électriques connu de l'homme de l'art permettant de contrôler la vitesse du moteur 10.

La carte de circuit imprimé est en couplage thermique de façon connue avec un radiateur (non représenté).

Parmi ces différents circuits, l'ensemble 50 comporte un circuit de filtrage 11 qui reçoit la tension de la batterie du véhicule et réalise des fonctions de filtrage et de protection contre des surtensions de façon bien connue. L'ensemble 50 comporte aussi un circuit de contrôle ou microcontrôleur 14 qui réalise une gestion de la puissance devant être délivrée au moteur de façon bien connue.

Les activateurs 12a, 12b, 12c sont généralement des moteurs pas à pas. Bien que trois seulement soient représentés sur la figure 1, par souci de simplicité, leur nombre peut être beaucoup plus élevé.

L'énergie électrique nécessaire au fonctionnement du dispositif de climatisation est fournie par un bus d'énergie principal 18 constitué par une paire de conducteurs reliés à la batterie du véhicule.

Le bus 18 alimente le groupe motoventilateur 10 ainsi que, conformément à l'invention, une unité de distribution d'énergie 20 qui délivre une tension régulée et sécurisée sur un bus d'énergie 22 alimentant en commun les autres éléments du dispositif de climatisation.

De la sorte, au niveau de chacun de ces éléments, il n'est pas utile de prévoir des moyens de filtrage et protection de tension. Peuvent éventuellement être nécessaires des circuits de régulation de tension pour fournir des niveaux de tension logique ou analogique requis.

Dans le mode de réalisation illustré, l'unité de distribution d'énergie 20 constitue également une interface entre un premier bus d'informations 24 et un bus d'informations 26 spécifique du dispositif de climatisation. Le bus 26 dessert les éléments 12a, 12b, 12c, 14, 16 pour acheminer, par adressage, des informations destinées à ceux-ci, par exemple, des informations de consigne de position de volets de répartition de flux d'air, et des informations transmises par ceux-ci, par exemple reflétant l'état du panneau de commande, ou les mesures des capteurs ou les positions réelles des volets.

On notera que la connexion d'éléments d'un dispositif de climatisation de véhicule sur un bus commun pour assurer une liaison informative avec une unité centrale (non ici représentée) est en elle-même connue. Dans l'exemple ici considéré, le bus 24 peut être un bus général sur lequel circulent des informations intéressant différents organes fonctionnels du véhicule ou un bus dédié au dispositif de climatisation mais différent du bus 26.

Un mode de réalisation de l'unité de distribution d'énergie 20 est illustré schématiquement par la figure 2.

L'unité 20 comprend un ensemble 30 de filtrage, protection et régulation de tension ayant une entrée d'énergie 32 connectée au bus d'énergie principal 18 et une sortie d'énergie 34 connectée au bus d'énergie sécurisée 22. L'unité 20 comprend en outre un circuit de contrôle ou microcontrôleur 40 relié à une première interface de bus 42 reliée au bus d'informations 24 et à une deuxième interface de bus 44 reliée au bus d'informations 26.

L'ensemble 30 de filtrage, protection et régulation est réalisé de façon classique. Un mode de réalisation est illustré par la figure 3 et sera décrit brièvement ci-après.

L'ensemble 30 comprend un circuit de filtrage et protection d'entrée 310, un circuit de régulation de tension 320, un circuit de protection en courant 330 et un circuit de filtrage de sortie 340.

Le circuit 310 reçoit la tension du bus 18 sur l'entrée 32 et réalise des fonctions de filtrage et protection contre les surtensions et transitoires par circuit LC et diodes, de façon bien connue.

Le circuit de régulation de tension 320 reçoit, via un diviseur de tension 322 une tension image de celle en entrée du circuit de filtrage de sortie 340 et commande un transistor 324 inséré entre les circuits 310 et 340 pour maintenir la tension en entrée du circuit de filtrage de sortie 340 à la valeur voulue.

Le circuit de protection en courant 330 reçoit une tension prélevée aux bornes d'un shunt 332 placé immédiatement en amont du circuit de sortie 340 et agit sur un interrupteur 334 pour couper l'alimentation en entrée du circuit de filtrage 310.

Le circuit de filtrage de sortie 340 est un circuit classique de type LC délivrant une tension régulée et sécurisée sur la sortie d'énergie 34.

L'ensemble 30 délivre aussi une tension d'alimentation régulée V_{CC} pour l'alimentation du microcontrôleur 40, cette tension étant prélevée sur le diviseur de tension 322 et filtrée par un circuit de filtrage 350 de type LC.

Le microcontrôleur 40 est programmé pour transférer les informations du bus 24 au bus 26, et réciproquement, à travers les interfaces de bus 42, 44. A cet effet, de façon bien connue en soi, les informations circulant sur l'un des bus sont lues par le microcontrôleur et retransmises sur l'autre bus à leur emplacement et avec le format voulu dans la trame utilisée sur ce dernier bus.

Le microcontrôleur 40 est en outre programmé de manière à réaliser une gestion de la distribution d'énergie sur le bus d'énergie 22, pour limiter la puissance maximale devant être délivrée à tout instant par l'unité de distribution d'énergie, et limiter par là-même le dimensionnement de l'ensemble 30 de filtrage, protection et régulation de tension, et du bus d'énergie 26.

Cela peut être réalisé en répartissant dans le temps l'énergie destinée à différents éléments, en particulier ceux requérant une puissance relativement importante. Il s'agit notamment des actionneurs 12a, 12b, 12c qui requièrent la puissance nécessaire à l'alimentation des moteurs pas à pas via une interface analogique.

La régulation d'air et de température est gérée par une unité centrale reliée au bus d'informations 24. A chaque commande générale d'une fonction telle que recyclage, désembuage, distribution pied ou distribution aération correspond une séquence d'activation des volets et du motoventilateur.

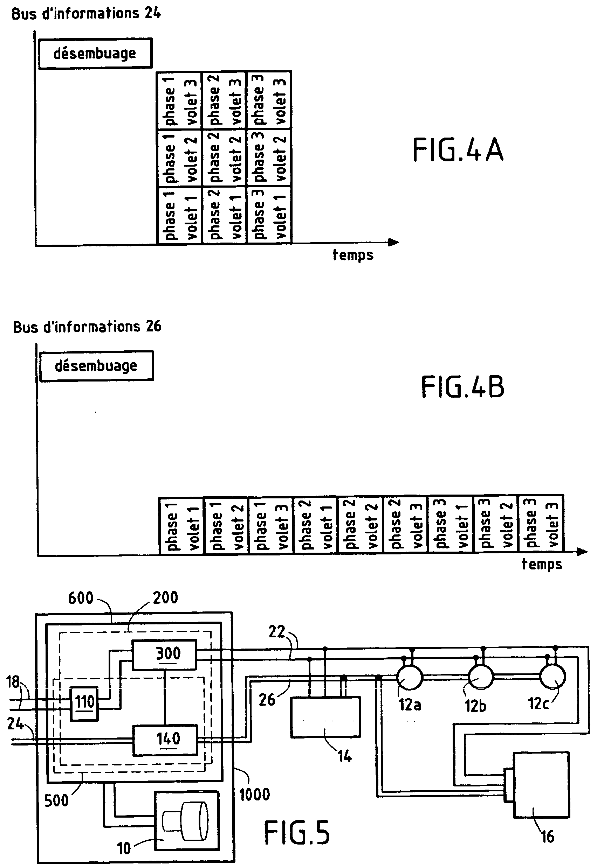

Ainsi, par exemple, comme le montre la figure 4A, une commande de désembuage peut se traduire, sur le bus d'informations 24 par une séquence comprenant des premières phases de pilotage simultanées des moteurs pas à pas associés à des volets 1, 2 et 3, puis des deuxièmes phases de pilotage pour les volets 1, 2 et 3 et des troisièmes phases de pilotage pour les volets 1, 2 et 3.

Les informations lues sur le bus 24 et destinées aux éléments connectés sur le bus d'énergie 22 sont lues par le microcontrôleur. Celui-ci détermine si de l'énergie devrait être fournie simultanément à plusieurs noeuds du bus 22 reliés à des éléments respectifs, tels les noeuds reliés aux actionneurs. Dans l'affirmative, le microcontrôleur 40 réorganise les informations de commande lues sur le bus d'informations 24 avant de les réinjecter sur le bus d'informations 26 afin de répartir ou décaler dans le temps la fourniture d'énergie à ces différents noeuds.

Ainsi, dans le cas de commande de désembuage évoqué plus haut, les phases de pilotage des moteurs pas à pas sont décalées temporellement et entrelacées comme montré par la figure 4B pour injecter sur le bus d'informations 26 une commande de désembuage comprenant une suite formée par les différentes premières phases de pilotage des volets 1, 2 et 3 suivie d'une suite formée par les deuxièmes phases de pilotage et d'une suite formée par les troisièmes phases de pilotage. A chaque instant, une seule phase de pilotage est activée, ce qui limite l'appel de courant.

D'une façon plus générale, selon le nombre d'éléments devant être activés simultanément par fourniture d'énergie, tel qu'il ressort des informations de commande véhiculées par le bus d'informations 24, le microcontrôleur 40 retransmet ces informations de commande sur le bus d'informations particulier 26 avec un décalage temporel éventuel, de manière à limiter le nombre d'éléments à activer dans le même temps, ce nombre pouvant être égal à un ou plus, éventuellement en fonction du type d'éléments concernés, de leur consommation en puissance...

Le montage de l'unité de distribution d'énergie 20 sur le groupe motoventilateur 100 permet de tirer parti du flux d'air pulsé produit par ce dernier pour évacuer les calories dissipées par l'unité 20.

Dans une variante de réalisation illustrée à la figure 5, l'unité de distribution d'énergie est maintenant intégrée dans le module de commande moteur du groupe motoventilateur et porte maintenant respectivement les références 200, 600 et 1000. Avantageusement, l'unité de distribution d'énergie 200 est montée sur le même support de circuit imprimé que l'ensemble de circuits de commande moteur référencé maintenant 500.

Par conséquent, le circuit de filtrage 110 et le microcontrôleur 140 associés à l'ensemble 500 peuvent être partagés avec l'unité de distribution d'énergie 200. Par souci de simplicité, seules les connexions concernant l'unité de distribution d'énergie 200 sont représentées sur le dessin.

Ainsi, l'unité de distribution d'énergie 200 dispose d'une tension préfiltrée, ce qui permet d'alléger éventuellement les circuits de filtrage compris dans l'ensemble de filtrage, protection et régulation référencé maintenant 300.

De même, les bus d'information 24 et 26 sont reliés au microcontrôleur 140, allégeant davantage l'unité de distribution d'énergie tout en permettant de satisfaire aux besoins de diagnostic de cette dernière.

Par ailleurs, l'intensité de courant nécessaire à l'unité de distribution d'énergie 200 est d'environ 3,5 A, à comparer à celle transitant dans l'ensemble 500 de circuits de commande moteur.

On voit que l'implantation de l'unité de distribution d'énergie 200 dans le module 600 de commande de moteur ne nécessite qu'une augmentation d'environ 10 % de la puissance à gérer.

Un avantage principal dans la variante de réalisation de la figure 5 est le fait que l'unité de distribution d'énergie puisse utiliser des éléments naturellement présents dans un module de commande de vitesse.

Le radiateur, le support des composants électroniques et un capot de protection contre l'humidité et la poussière sont partagés entre le module de commande de vitesse et le distributeur d'énergie réduisant ainsi les coûts de fabrication et de montage.

Un autre avantage est dimensionnel car la suppression de redondance des composants utilisés en commun permet de réduire le volume global des deux fonctions.

L'unité de distribution d'énergie peut aussi être montée dans le module de commande d'un réchauffeur électrique additionnel, surtout que l'intensité du courant gérée par ce module est très importante, de l'ordre de 100 A.

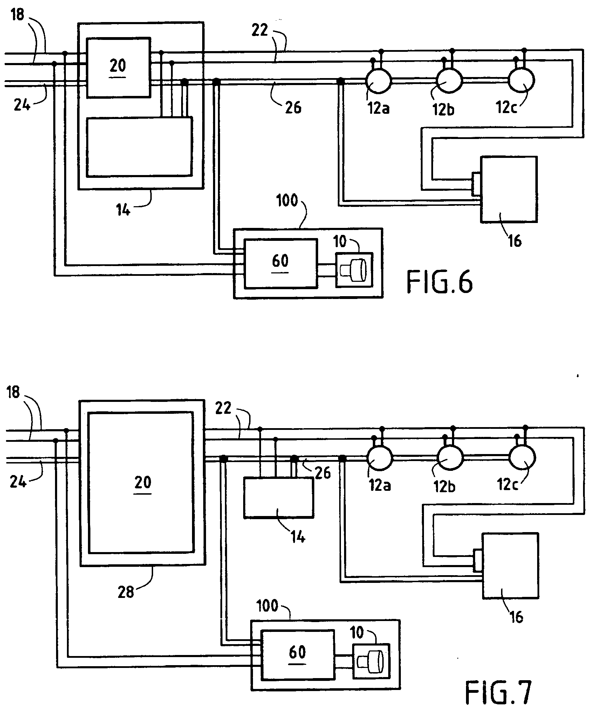

Il est toutefois possible de monter l'unité de distribution d'énergie en d'autres emplacements, par exemple au niveau du panneau de contrôle de ventilation 14 comme montré sur la figure 6. En revanche, dans ce cas, la puissance à gérer sera doublée car l'intensité du courant nécessaire au panneau de contrôle de ventilation est du même ordre de grandeur (environ 3A) que celle gérée par le distributeur d'énergie.

Il est possible aussi que l'unité de distribution d'énergie soit sous forme d'un module indépendant 28 (figure 7) monté par exemple sur le boîtier de climatisation portant les actionneurs 12a, 12b, 12c. Dans ces deux modes de réalisation, le groupe motoventilateur 10 est relié au bus d'informations spécifique 26.

Bien que l'on ait envisagé ci-dessus la combinaison des fonctions de passerelle d'énergie et de passerelle d'informations au sein de l'unité de distribution d'énergie, celle-ci pourra être limitée à la seule fonction de passerelle d'énergie matérialisée essentiellement par l'ensemble 30 de filtrage, protection et régulation de tension.

## Revendications

1. Unité de distribution d'énergie (20 ; 200) pour une pluralité d'éléments (12, 14, 16) alimentés en tension dans un véhicule automobile, comportant un ensemble (30 ; 300) de filtrage, protection et régulation de tension connecté entre une entrée d'énergie (32) pour recevoir une tension d'entrée via un bus d'énergie principal (18) relié à l'entrée d'énergie (32) et une sortie d'énergie (34) pour délivrer une même tension de fonctionnement sécurisée auxdits éléments (12, 14, 16) via un bus d'énergie (22) relié à la sortie d'énergie (34) et un circuit de contrôle (40; 140) connecté entre une entrée d'informations (42) d'un premier bus d'informations (24) et une sortie d'informations (44) d'un bus d'informations (26) spécifique auxdits éléments (12, 14, 16), pour transférer sur le bus d'informations spécifique les informations relatives auxdits éléments (12, 14, 16) circulant sur le premier bus d'informations, et inversement.

2. Unité selon la revendication 1, **caractérisée en ce que** le circuit de contrôle (40 ; 140) détermine l'énergie devant être fournie simultanément à la pluralité d'éléments (12, 14, 16).

3. Unité selon la revendication 2, **caractérisée en ce que** le circuit de contrôle (40; 140) réorganise les informations du premier bus d'informations (24) avant de les réinjecter sur le bus d'informations (26) spécifique.

4. Unité selon la revendication 2 ou 3, **caractérisée en ce que** le circuit de contrôle (40 ; 140) comprend des moyens pour répartir dans le temps l'énergie disponible entre différents éléments, par décalage temporel éventuel des commandes adressées à ces éléments via le bus d'informations (26) spécifique.

5. Dispositif de climatisation de véhicule automobile comprenant un groupe motoventilateur (100 ; 1000) et une pluralité d'éléments (12, 14, 16) connectés à des moyens d'alimentation en tension, **caractérisé en ce qu'**il comprend une unité de distribution d'énergie (20 ; 200) selon l'une quelconque des revendications 1 à 4 et un bus d'énergie sécurisée (22) relié à la sortie d'énergie de l'unité de distribution d'énergie (20 ; 200) et alimentant lesdits éléments.

6. Dispositif selon la revendication 5, **caractérisé en ce que** l'unité de distribution d'énergie (200) est implantée dans le groupe motoventilateur (1000).

7. Dispositif selon la revendication 6, **caractérisé en ce que** l'unité de distribution (200) est implantée dans un module (600) de commande de moteur du groupe motoventilateur (1000).

8. Dispositif selon la revendication 7, **caractérisé en ce que** l'unité de distribution (200) reçoit une tension filtrée d'un circuit de filtrage (110) du module (600) de commande moteur du groupe motoventilateur (1000).

9. Dispositif selon la revendication 6, **caractérisé en ce que** l'entrée d'alimentation de l'unité de distribution d'énergie (200) reçoit la tension d'alimentation du motoventilateur (1000).

10. Dispositif selon la revendication 5, **caractérisé en ce que** l'unité de distribution d'énergie (20) est implantée dans un tableau (14) de commande du dispositif de climatisation.

## Patentansprüche

1. Energieverteilungseinheit (20; 200) für eine Vielzahl von Elementen (12, 14, 16), die in einem Kraftfahrzeug mit Spannung versorgt werden,
die eine Einheit (30; 300) zur Filterung, zum Schutz und zur Spannungsregelung, die zwischen einem Energieeingang (32), um eine Eingangsspannung über einen mit dem Energieeingang (32) verbundenen Hauptenergiebus (18) zu empfangen, und einem Energieausgang (34) verbunden ist, um eine gleiche gesicherte Betriebsspannung über einen mit dem Energieausgang (34) verbundenen Energiebus (22) an die Elemente (12, 14, 16) zu liefern, und einen Steuerschaltkreis (40; 140) aufweist, der zwischen einem Informationseingang (42) eines ersten Informationsbusses (24) und einem Informationsausgang (44) eines für die Elemente (12, 14, 16) spezifischen Informationsbusses (26) verbunden ist, um auf den spezifischen Informationsbus die Informationen bezüglich der Elemente (12, 14, 16) zu übertragen, die auf dem ersten Informationsbus fließen, und umgekehrt.

2. Einheit nach Anspruch 1, **dadurch gekennzeichnet, dass** der Steuerschaltkreis (40; 140) die Energie bestimmt, die gleichzeitig an die Vielzahl von Elementen (12, 14, 16) geliefert werden soll.

3. Einheit nach Anspruch 2, **dadurch gekennzeichnet, dass** der Steuerschaltkreis (40; 140) die Informationen des ersten Informationsbusses (24) neu organisiert, ehe sie auf den spezifischen Informationsbus (26) wieder eingespeist werden.

4. Einheit nach Anspruch 2 oder 3, **dadurch gekennzeichnet, dass** der Steuerschaltkreis (40; 140) Einrichtungen enthält, um die verfügbare Energie zwischen verschiedenen Elementen durch mögliche zeitliche Verschiebung der Steuerbefehle zeitlich zu verteilen, die an diese Elemente über den spezifischen Informationsbus (26) geschickt werden.

5. Klimaanlage eines Kraftfahrzeugs, die einen Gebläsemotor (100; 1000) und eine Vielzahl von Elementen (12, 14, 16) enthält, die mit Spannungsversorgungseinrichtungen verbunden sind, **dadurch gekennzeichnet, dass** sie eine Energieverteilungseinheit (20; 200) nach einem der Ansprüche 1 bis 4 und einen gesicherten Energiebus (22) enthält, der mit dem Energieausgang der Energieverteilungseinheit (20; 200) verbunden ist und die Elemente versorgt.

6. Anlage nach Anspruch 5, **dadurch gekennzeichnet, dass** die Energieverteilungseinheit (200) in den Gebläsemotor (1000) eingebaut ist.

7. Anlage nach Anspruch 6, **dadurch gekennzeichnet, dass** die Verteilungseinheit (200) in ein Motorsteuermodul (600) des Gebläsemotors (1000) eingebaut ist.

8. Anlage nach Anspruch 7, **dadurch gekennzeichnet, dass** die Verteilungseinheit (200) eine gefilterte Spannung von einem Filterschaltkreis (110) des Motorsteuermoduls (600) des Gebläsemotors (1000) empfängt.

9. Anlage nach Anspruch 6, **dadurch gekennzeichnet, dass** der Versorgungseingang der Energieverteilungseinheit (200) die Versorgungsspannung vom Gebläse (1000) empfängt.

10. Anlage nach Anspruch 5, **dadurch gekennzeichnet, dass** die Energieverteilungseinheit (20) in eine Steuertabelle (14) der Klimaanlage eingebaut ist.

## Claims

1. Power distribution unit (20; 200) for a plurality of elements (12, 14, 16) supplied with voltage in a motor vehicle,
comprising a voltage filtering, protection and regulation assembly (30; 300) connected between a power input (32) for receiving an input voltage via a main power bus (18) linked to the power input (32) and a power output (34) for delivering a same secure operating voltage to said elements (12, 14, 16) via a power bus (22) linked to the power output (34) and a control circuit (40; 140) connected between an information input (42) of a first information bus (24) and an information output (44) of an information bus (26) specific to said elements (12, 14, 16), for transferring, over the specific information bus, the information relating to said elements (12, 14, 16) circulating on the first information bus, and vice versa.

2. Unit according to Claim 1, **characterized in that** the control circuit (40; 140) determines the power that has to be supplied simultaneously to the plurality of elements (12, 14, 16).

3. Unit according to Claim 2, **characterized in that** the control circuit (40; 140) reorganizes the information from the first information bus (24) before feeding it back onto the specific information bus (26).

4. Unit according to Claim 2 or 3, **characterized in that** the control circuit (40; 140) comprises means for allocating in time the power available between different elements, by possible temporal shifting of the commands addressed to these elements via the specific information bus (26).

5. Motor vehicle air conditioning device comprising an electric fan set (100; 1000) and a plurality of elements (12, 14, 16) connected to voltage supply means,
**characterized in that** it comprises a power distribution unit (20; 200) according to any one of Claims 1 to 4 and a secure power bus (22) linked to the power output of the power distribution unit (20; 200) and supplying said elements.

6. Device according to Claim 5, **characterized in that** the power distribution unit (200) is installed in the electric fan set (1000).

7. Device according to Claim 6, **characterized in that** the distribution unit (200) is installed in a motor control module (600) of the electric fan set (1000).

8. Device according to Claim 7, **characterized in that** the distribution unit (200) receives a filtered voltage from a filtering circuit (110) of the motor control module (600) of the electric fan set (1000).

9. Device according to Claim 6, **characterized in that** the power supply input of the power distribution unit (200) receives the power supply voltage from the electric fan set (1000).

10. Device according to Claim 5, **characterized in that** the power distribution unit (20) is installed in a control panel (14) of the air conditioning device.
